# EUROPEAN PATENT SPECIFICATION

(11) **EP 1 406 010 B1**
(45) Date of publication and mention of the grant of the patent: **21.11.2018**
(21) Application number: 03103634.6
(22) Date of filing: 01.10.2003
(51) Int. Cl.: F02D 41/04, F02N 19/00, F02N 11/08, F02D 41/06, F02N 11/04, F02N 5/04

(54) **Engine starting control device**
Motorstartsteuerung
Dispositif de commande du démarrage d'un moteur

(30) Priority: 04.10.2002 JP 2002292488
(43) Date of publication of application: 07.04.2004
(73) Proprietor: HONDA MOTOR CO., LTD., Tokyo 107-8556 (JP)
(72) Inventor: Ota, Atsuo, 1-chome, Wako-shi, SAITAMA (JP); Nagatsuyu, Toshiya, 1-chome, Wako-shi, SAITAMA (JP)
(74) Representative: Ahner, Philippe

(56) References cited:
- EP-A- 1 055 816
- EP-A1- 1 136 696
- EP-A2- 1 227 230
- EP-A2- 1 357 286
- FR-A- 2 815 087
- JP-A- 2000 274 333

## Description

### [Detailed Description of the Invention]

### [Technical Field to which the Invention Belongs]

The present invention relates to an engine starting control device, and more particularly to an engine starting control device capable of making it easy to stop and to restart an engine directly after a stop of the engine.

### [Prior Art]

For improving an environment or others resulting from a reduction in a fuel consumption amount, the fact that an engine is stopped when stopping a vehicle temporarily at an intersection or others, so-to-speak an idling stop function, is known. In a vehicle having this idling stop function, a throttle sensor which senses opening and closing of a throttle valve is provided, and when the sensor detects that the throttle valve has been closed, an ignition of an engine is stopped, whereas when the sensor detects that the throttle has been opened, the engine is started. When starting a vehicle from an idling stop state, such a vehicle is proposed as that a driving force is increased until the vehicle start to move, and in a low vehicle speed area thereafter, the driving force is temporarily decreased (JP-A-2001-355480).

Furthermore, after the ignition is stopped, an engine is formed so as to start when the throttle valve is opened while a revolution of the engine is maintained on account of an inertia, and it can be made also easy to restart the engine after a stop of the ignition for an extremely short period of time. In this case, a standard speed of the engine is set, and when an engine speed is more than this standard speed, with an "opening" operation of the throttle valve, a current is carried to a starter motor for a normal revolution of an engine. On the other hand, when the engine speed is less than this standard speed, positioning of a crankshaft is performed after having waited a stop of the revolution of an engine. The crankshaft is positioned by the starter motor at a position to avoid being a compression stroke in which a large torque is required, for ensuring a starting. Thus, after this positioning, the current is carried to the starter motor for the normal revolution of engine to thereby restart the engine.

A further example of engine starting control device is shown in EP 1 357 286 A.

### [Problems to be Solved by the Invention]

It is desirable that size of the starter motor is SR 23927.JP/GP as small as possible for small sizing of a vehicle. Thus, it is preferable to effectively utilize the inertia of the engine at the time of starting the engine so that the engine can get over a top dead center of the compression stroke. That is, a torque of the starter motor is selected in consideration of the inertia of the engine. Accordingly, the standard speed is set such that a total torque of the torque of the starter motor and the torque attributed to the inertia of engine is above a torque needed for getting over the compression stroke.

However, the setting is what is made in consideration of getting over the top dead center of the compression stroke, and when the position of the crankshaft is, for example, in an explosion stroke, a large torque is not necessary at the time of starting. Accordingly, in this case, even when the engine speed is within a low speed area in which a large inertia of engine cannot be expected, that is, even when the engine speed is less than the standard speed set in consideration of getting over the top dead center, the current for a normal revolution of engine may be carried to the starter motor immediately.

Hitherto, however, even in such a preferable case, if only being under a condition that an engine speed is less than a standard speed, unless after a stop of an engine had been waited for a moment and thereafter a crankshaft has been positioned, the current for the normal revolution of engine is never carried to the starter motor.

Thus, even when an engine speed is low, but when being under an advantageous condition for the starter motor, it is desired that the current for a normal revolution of engine is immediately carried to the starter motor so that the engine can restart its revolution.

In view of the above-mentioned problems, it is an object of the present invention to provide an engine starting control device capable of restarting an engine in a short period of time after a stop of the engine for a moment.

### [Means for Solving the Problems]

For achieving an above-described object, according to a first aspect of the invention such as defined by claim 1, there is provided an engine starting control device including means for stopping an engine by detecting that a throttle valve has been closed and starting the engine by detecting that the throttle valve has been opened, the control device comprises means for positioning a crankshaft to a predetermined position for starting an engine prior to a start of the engine, means for detecting a crank position when it is detected that the throttle valve has been opened, means for deciding a normal revolution priority speed depending upon a detected crank position, and means for deciding a starting mode for starting an engine, by normally revolving the engine immediately when an engine speed is more than the normal revolution priority speed under the condition whether the engine speed is more than the normal revolution priority speed when the throttle valve has been opened, whereas, by normally revolving the engine after positioning the crank position in the predetermined position, when the engine speed is less than the normal revolution priority speed.

According to the first aspect of the invention, when the engine speed is higher than the normal revolution priority speed decided depending on a crank angle, irrespective of positioning a crankshaft to a position of a light load, for example, it is determined that an engine can start its revolution and the engine can immediately start its movement. Accordingly, a time needed, that is, from an opening operation of a throttle valve up to starting an engine can be made shorter than a time needed for starting the engine after positioning a crankshaft.

Furthermore, according to a second aspect of the invention, there is provided an engine starting control device which comprises means for braking an engine in case of having been decided by the starting mode deciding means that an engine will be started by normally revolving the engine after the position of the crankshaft is positioned in the predetermined position.

According to the second aspect of the invention an engine can stop in a short period of time, while in a conventional case, an engine can start only after waiting until the engine has been spontaneously stopped and then the crankshaft has been positioned, therefore, a time needed from an opening operation of a throttle valve up to starting an engine can be decreased.

### [Mode for Carrying Out the Invention]

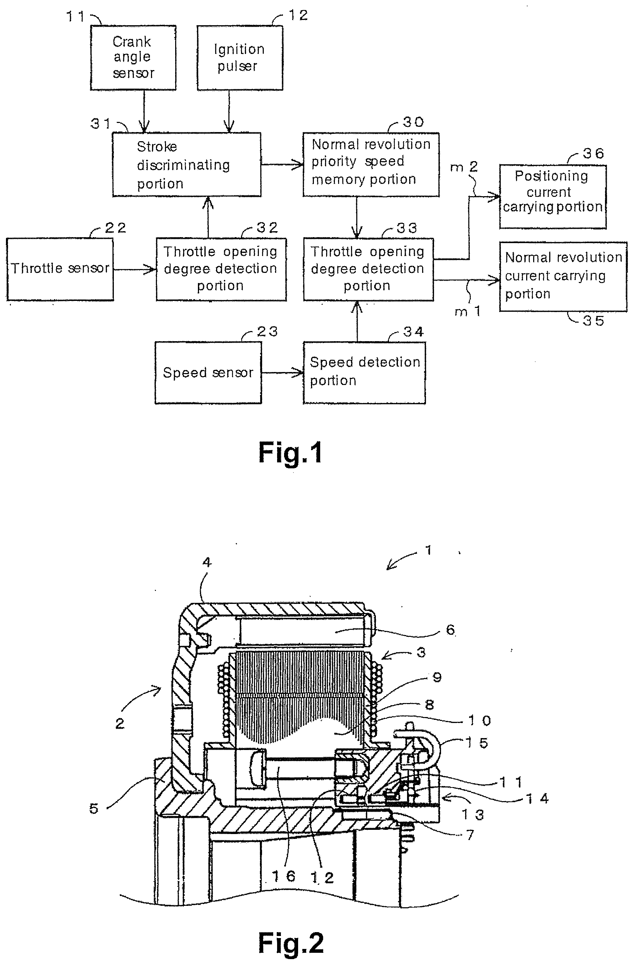

Hereinafter, the invention will be described in detail with reference to the drawings. Fig. 2 is a sectional view of a starter motor included in an engine starting control device according to an embodiment of the invention. A starter motor 1 includes a rotor 2 and a stator 3. The starter motor 1 is starting means of an engine not shown and functions as a generator driven by the engine after the engine starts autonomous driving.

The rotor 2 includes a yoke 4 in a shape of a cup, a sleeve that is a hub 5 connecting the yoke 4 to a crankshaft (not shown) of the engine, and a plurality of magnets 6 arranged along an inner periphery of the yoke 4. On an outer periphery of an end portion of the sleeve 5, a sensor magnet 7 in a shape of a ring for detecting a revolution is fittingly inserted. The sensor magnet 7 includes a magnetization band (a magnetization band for detecting an angle) inverting a polarity for each of a predetermined angle and one place of a magnetization portion within one revolution or a magnetization band magnetized to the polarity different from others by only one place (a magnetization portion or a magnetization band for detecting a reference position).

The stator 3 includes a stator core 8, a stator winding 10 wound on the stator core 8 via an insulating material 9. The stator winding 10 is a three phase winding. The stator core 8 is fixed to a casing of the engine via a stator base not shown. In the stator 3, a sensor package 13 is provided which includes three pieces of first magnetic sensors 11 arranged to be opposed to the magnetization band for detecting the angle of the sensor magnet 7 and second magnetic sensors 12 arranged to be opposed to the magnetization portion or the magnetization band for detecting the reference position.

The first magnetic sensors 11 output a detection signal alternating for each of the predetermined angle corresponding to the magnetization band of the sensor magnet 7 changing the polarities for each of the predetermined angle. Since this detection signal corresponds to a change of a crank angle, hereinafter, the first magnetic sensor 11 is referred to as a crank angle sensor 11. The crank angle sensors are arranged with three pieces of them having a phase difference of an electric angle 120° corresponding to a U, V, W phase of the starter motor 1. That is, the crank angle sensor 11 includes sensors 11U, 11V, and 11W.

The second magnetic sensor outputs a pulse signal one time for each of one revolution corresponding to the magnetization portion or the magnetization band for detecting the reference position. This pulse signal is used for detecting an ignition timing, so that, hereinafter, the second magnetic sensor 12 is referred as an ignition pulser 12.

The sensor package 13 includes the crank angle sensor 11, a base 14 supporting the ignition pulser 12, and a lead wire 15 connecting the sensors 11 and 12 to a control portion (not shown), and is fixed to the stator 3 with bolts 16.

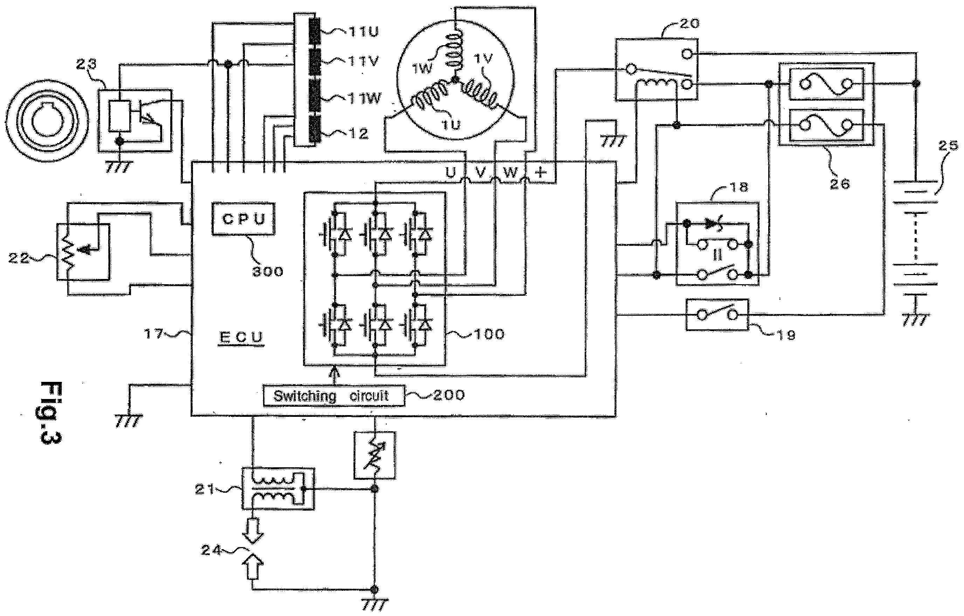

Fig. 3 is a system configuration view of an essential portion of an engine for a motorcycle including a starter motor. An EDU 17 is equipped with a rectifying circuit 100 connected to three phase windings 1U, 1V, and 1W of the starter motor 1 and a switching circuit 200 controlling switching elements (for example, FET) constituting the rectifying circuit 100 according to outputs of the crank angle sensors 11U, 11V, and 11W. Further, the ECU 17 is equipped with a microcomputer (CPU) 300 operating according to a predetermined program based on a change-over of detection signals of the crank angle sensors 11U, 11V, and 11W, the ignition pulser 12, and respective sensors described later, and switches.

A main switch 18, a starter switch 19, a starter relay 20, an ignition coil 21, a throttle sensor 22, and a speed sensor 23 are connected to the ECU 17. The speed sensor 23 is formed so as to output the detection signal for each of one revolution of a crankshaft, and is arranged in proximity to the crankshaft. An ignition plug 24 is connected to a downstream of an ignition coil 21.

As an electric source of above-mentioned each portion, batteries 25 are provided, and an electric current is supplied to each portion from the batteries 25 via fuses 26 and a main switch 18.

Next, an engine starting control device controlling the starter motor will be explained. The engine starting control device includes a restarting function stopping an engine with a "closing" operation of a throttle valve and starting the engine with an "opening" operation of the throttle valve. This restarting function, at the time of engine starting operation, that is, when the "opening" operation of the throttle valve is performed, depending upon a condition of an engine speed, includes a function to decide whether a process proceeds to a first starting mode which carries a current to the starter motor 1 such that an engine is normally revolved, or a process proceeds to a second starting mode which carries a current to the starter motor 1 for a normal revolution of an engine after a current is carried to the starter motor 1 for positioning a crankshaft.

That is, when an engine speed is more than a standard speed, a greater engine inertia can be expected, therefore, an engine is immediately made in a normal revolution to restart the engine. On the other hand, when the engine speed is lowered less than the standard speed, the greater engine inertia cannot be expected, therefore, even when the current for a normal revolution of the starter motor is carried in that state to the starter motor, it is difficult for the engine to get over a compression stroke. Thus, the engine is revolved in a reverse direction up to a crank position being not needed a greater torque, and again the engine is restarted by carrying the current for the normal of the engine to the starter motor 1.

Furthermore, in the present embodiment, when a starting mode based on the engine speed is decided, the engine speed (standard speed) constituting a determination standard for this decision is made variable for each of a stroke or for each of a crank angle of an engine. The reason is that depending upon the crank position determined by the stroke or the crank angle, the engine can restart easily from even a low engine speed. For example, in an explosion stroke, even from an engine stop state, the engine can restart.

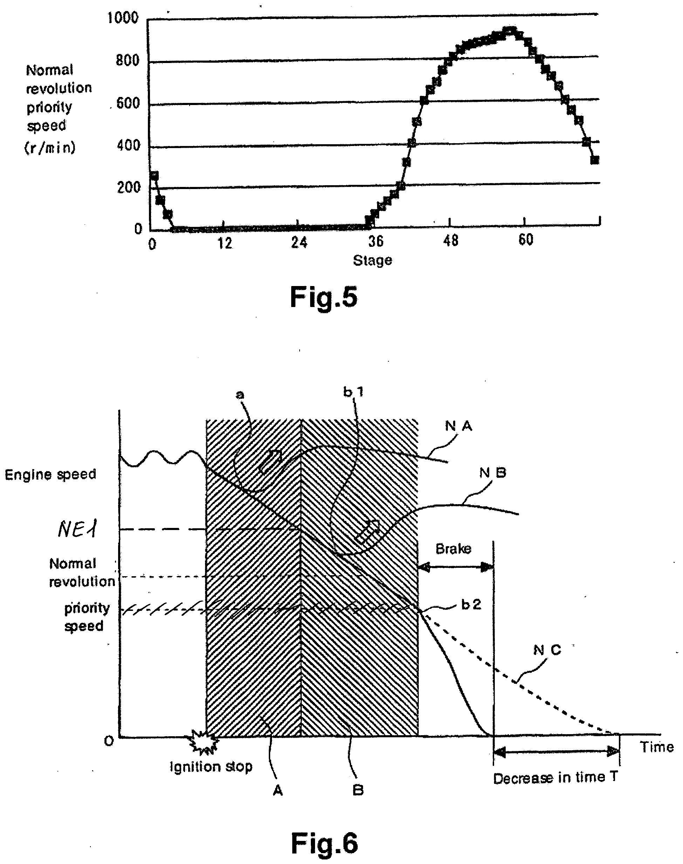

Fig. 1 is a block diagram showing the functions of the essential portions of the engine starting control device on the premise of the restarting function by the opening and closing operation of the throttle valve, and these functions are realized as the function of the CPU 300. In a normal revolution priority speed memory portion 30, a normal revolution priority speed for deciding whether or not an engine is revolved in a normal direction is stored beforehand corresponding to each of the stroke of a suction, compression, explosion, and exhaust or the crank angle of one cycle. An example of the normal revolution priority speed corresponding to the crank angle will be described later regarding Fig. 5.

A stroke discriminating portion 31, based on each of the detection signal of the crank angle sensors 11 and the ignition pulser 12, discriminates the stroke or the crank angle. Hereinafter, an example for allocating a stage number for each of a crank angle 10° within one cycle (two revolutions for a four cycle engine), and discriminating in which stage the crank position exists, will be explained. The crank position of one cycle is represented by the crank angles of 72 stages. A discrimination of the crank angle is conducted when the throttle valve is "opening" operated. That is, the crank angle is discriminated when a throttle valve "opening" is detected by a throttle valve opening degree detection portion 32 based on the output of the throttle sensor 22.

The discriminated crank angle, that is, the stage number is inputted into the normal revolution priority speed memory portion 30, the normal revolution priority speed corresponding to the stage number is read out from the normal revolution priority speed memory portion 30 to a starting mode deciding portion 33. A speed detection portion 34 detects the engine speed from an interval of an output pulse of a speed sensor 23, and the detected engine speed is inputted into the starting mode deciding portion 33.

The starting mode deciding portion 33 decides a starting mode by comparing the engine speed with the normal revolution priority speed. When the engine speed is more than the normal revolution priority speed, a decided signal m1 is outputted, when the engine speed is less than the normal revolution priority speed, a decided signal m2 is outputted. The decided signal m1 is inputted into a normal revolution current carrying portion 35, the decided signal m2 is inputted into a positioning current carrying portion 36.

Meanwhile, a positioning current carrying is performed after an engine is substantially stopped. In addition, for starting an engine quickly by starting the positioning current carrying in an early stage, even when the decided signal m1 is outputted, when the engine speed is lowered in a certain degree, it is better to brake an engine by driving the motor in the reverse direction.

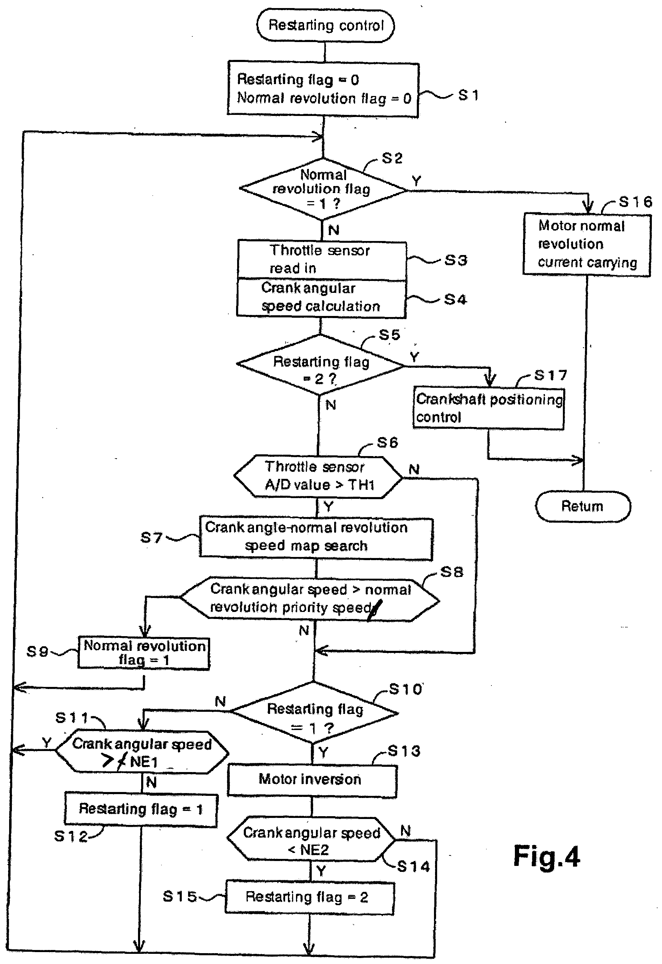

Fig. 4 is a flow chart of an engine restarting control. In a step S1, a restarting flag and a normal revolution flag are initialized into "0". In a step S2, it is discriminated whether or not the normal revolution flag is "1". At first, a flag is initialized into "0", therefore, the step S2 becomes negative, and a process proceeds to a step S3. In the step S3, a detected value of the throttle sensor 22 is read. In a step S4, a crank angular speed is calculated.

In a step S5, it is discriminated whether or not the restarting flag is "2". Since the flag is initialized into "0", the step S5 becomes negative, and a process proceeds to a step S6. In the step S6, it is determined whether or not the detection value of the throttle sensor is more than a previously set opening degree value TH1. When the detection value of the throttle sensor is more than the previously set opening degree value TH1, it is determined that the opening operation of the throttle valve is conducted for restarting an engine, a process proceeds to a step S7. In the step S7, the normal revolution priority speed corresponding to a present crank angle is searched using a map set in advance. An example of the map is shown in Fig. 5.

In a step S8, it is determined whether or not the crank angular speed is more than the normal revolution priority speed. When the crank angular speed is more than the normal revolution priority speed, unless again performing a positioning processing of the crankshaft, an engine can be started, a process proceeds to a step S9, and the normal revolution flag is set to "1" for enabling the normal revolution of the starter motor. Resulting from setting the normal revolution flag to "1", the step S2 becomes a positive, a process proceeds to a step S16, and the current for the normal revolution of engine is carried to the starter motor.

When the crank angular speed is not more than the normal revolution priority speed, in that state it is difficult to start the normal revolution of engine. Accordingly, in this case, after the positioning processing of the crankshaft is performed, an engine is normally revolved. The positioning of the crankshaft is performed after an engine is stopped for a moment. Furthermore, for positioning the crankshaft quickly by stopping an engine as early as possible, when the engine speed (crank angular speed) is less than a predetermined speed NE1, the current for reversing the starter motor is carried, and the engine is braked.

First, a process proceeds to a step S10, it is discriminated whether or not the restarting flag is "1". When a crank angular speed is less than the predetermined speed NE1, the restarting flag is "1". At first, since the restarting flag is not "1", a process proceeds to a step S11, and it is determined whether or not the crank angular speed is more than the predetermined speed NE1. When the crank angular speed is less than the predetermined speed NE1, a process proceeds to a step S12, and "1" is set in the restarting flag.

When the restarting flag becomes "1", in a processing of the next time, the step S10 becomes a affirmative, a process proceeds from the step S10 to a step S13, and the starter motor is reversed. In a step S14, it is determined whether the crank angular speed has become less than a predetermined speed NE2 (a speed NE2 is set substantially to 0). When the step 14 is affirmative, a process proceeds to a step 15, "2" is set to the restarting flag. Resulting from "2" set to the restarting flag, the step 5 becomes affirmative, a process proceeds to a step S17, and the positioning processing of the crankshaft is performed.

In the positioning processing of the crankshaft, the current for reversing the starter motor is carried, the crankshaft is reversed up to a stage small in the revolution load. The crankshaft may be positioned in a position excluding the compression stroke. After the crankshaft is reversed, an engine, which is formed to be regularly and normally revolved is disclosed in JP-A-7-71350.

Fig. 5 is a view showing a relationship between a stage, that is, the crank position and the normal revolution priority speed. In Fig. 5, from the first stage to the 36th stage which correspond to the explosion and exhaust stroke, since the engine load is small, the normal revolution priority speed is set to a low value. On the other hand, from the 37th stage to the 72nd stage which correspond to the suction and compression strokes, since the engine load is great, the normal revolutions priority speed is set to a high value.

Fig. 6 is a view showing a variation of the engine speed showing an outline of the starting control according to the present embodiment. In Fig. 6, a region A is a normal revolution priority region, when in this region A the throttle valve is opened, it is a region to normally revolve the starter motor immediately and to restart an engine. On the other hand, a region B is the normal revolution priority region with a condition for the engine speed, when in this region B the throttle valve is opened, and when the engine speed is more than the normal revolution priority speed depending on the crank angle, the starter motor is immediately revolved in the normal direction, and when the engine speed is less than the normal revolution priority speed, to thereby brake the engine.

At the moment a of the region A, for example, when the throttle valve has been opened, from at that moment, the starter motor is immediately revolved in the normal direction, and the engine speed increases as a line NA. Whereas, at the moment b1 of the region B, when the throttle valve has been opened, and when the engine speed at that moment is more than the normal revolution priority speed, the starter motor is immediately revolved in the normal direction from that moment, and the engine speed increases as a line NB.

In addition, at the moment b2 of the region B when the throttle valve has been opened, since the engine speed is less than the normal revolution priority speed and than NE1, an ignition is stopped for a moment and when an engine stops then the crankshaft is positioned, again the engine will be restarted by revolving the starter motor in the normal direction. In this case, the engine is braked by carrying the current and others in a direction to rotate the starter motor in a reverse direction.

When an engine is not braked, the engine speed lowers along a line NC. Accordingly, when an engine is braked, by comparing it with when an engine is not braked, a time can be decreased by an amount of T.

### [Advantage of the Invention]

According to the invention of claims 1 and 2, when an engine is restarted by opening operation of a throttle valve, a time needed until an engine is started can be decreased.

Even when an engine speed is low, an engine can be started immediately depending upon a crank position, whereas even when an engine speed is relatively at high speed, when the crank position is at a high load position (fore example, prior to a top dead center of a compression stroke) not suitable for starting an engine, there may be a case where, an engine cannot start immediately from such a position. In the invention of a claim 1, an inconvenience such as this can be overcome and even when the crank position is not positioned to a light load position suited to restart an engine, the standard speed (normal revolution priority speed) is made variable, in which engine can be made immediately restart by using a remaining inertia, depending upon the crank position.

Furthermore, in the invention of the claim 2, even when an engine is restarted after positioning the crankshaft, without aimlessly waiting until an engine stops, an engine can start by positioning the crankshaft as early as possible by braking an engine by inversely carrying the current to a starter motor or others.

### [Brief Description of the Drawings]

[Fig. 1] Fig. 1 is a block diagram of a function in an essential portion of an engine starting control device according to an embodiment of the invention.
[Fig. 2] Fig. 2 is a sectional view of a starter motor included in an engine starting control device.
[Fig. 3] Fig. 3 is a system configuration view of an essential portion of an engine for a motorcycle including a starter motor.
[Fig. 4] Fig. 4 is a flow chart showing an operation of an essential portion of an engine starting control device.
[Fig. 5] Fig. 5 is a view showing one example of a normal revolution priority speed corresponding to stages.
[Fig. 6] Fig. 6 is a view showing a variation of an engine speed resulting from an engine starting control of the embodiment.

### [Description of Reference Numerals and Signs]

1...Motor, 2...Rotor, 3...Stator, 4...Yoke, 5...Sleeve, 6...Rotor Magnet, 7...Magnet Sensor, 10...Stator Winding, 11...Sensor for a motor, 12...Reference position Sensor, 30...Normal revolution priority speed memory portion, 31...Stroke discriminating portion, 33...Starting mode deciding portion.

## Claims

1. An engine starting control device including means for stopping an engine by detecting that a throttle valve has been closed and starting the engine by detecting that the throttle valve has been opened, the control device comprising:
means for positioning a crankshaft to a predetermined position for starting an engine prior to a start of the engine;
means for detecting a crank position when detecting that the throttle valve having been opened; and
means for deciding in which conditions to restart an engine while a revolution of the engine is maintained on account of an inertia, by normally revolving the engine immediately when the engine speed is more than a normal revolution priority speed and the throttle valve has been opened, and by normally revolving the engine after stopping the engine and positioning the crank position in the predetermined position, when the engine speed is less than the normal revolution priority speed;
**characterized in that** the control device further comprises means for determing the normal revolution priority speed, the normal revolution priority speed being function of the value stage, which is the crank position over the whole engine combustion cycle.

2. The engine starting control device as set forth in claim 1, wherein the control device is further **characterized by** comprising means for braking the engine in case of deciding a start of an engine by normally revolving the engine after positioning the crank position in the predetermined position by the deciding means.

## Patentansprüche

1. Motorstartsteuerung einschließlich Mittel zum Anhalten eines Motors durch Erkennen, dass ein Drosselventil geschlossen wurde, und Starten des Motors durch Erkennen, dass das Drosselventil geöffnet wurde, wobei die Steuerung umfasst:
Mittel zum Positionieren einer Kurbelwelle auf eine vorbestimmte Position zum Starten eines Motors vor einem Start des Motors;
Mittel zum Erkennen einer Kurbelwellenposition, wenn erkannt wird, dass das Drosselventil geöffnet wurde; und
Mittel zum Entscheiden, unter welchen Bedingungen ein Motor neu zu starten ist, während eine Drehzahl des Motors aufgrund von Trägheit aufrechterhalten wird, durch normales Drehen des Motors, unmittelbar wenn die Motorgeschwindigkeit höher ist als eine normale Drehzahlprioritätsgeschwindigkeit und das Drosselventil geöffnet wurde, und durch normales Drehen des Motors, nachdem der Motor angehalten und die Kurbelwellenposition in der vorbestimmten Position positioniert wurde, wenn die Motorgeschwindigkeit niedriger ist als die normale Drehzahlprioritätsgeschwindigkeit;
**dadurch gekennzeichnet, dass** die Steuerung weiterhin Mittel zum Bestimmen der normalen Drehzahlprioritätsgeschwindigkeit umfasst, wobei die normale Drehzahlprioritätsgeschwindigkeit abhängig ist von der Wertstufe, welche die Kurbelwellenposition über den gesamten Motorverbrennungszyklus ist.

2. Motorstartsteuerung nach Anspruch 1, wobei die Steuerung weiterhin **dadurch gekennzeichnet ist, dass** sie Mittel zum Bremsen des Motors für den Fall umfasst, dass durch die Entscheidungsmittel entschieden wird, einen Motor durch normales Drehen des Motors zu starten, nachdem die Kurbelwellenposition in der vorbestimmten Position positioniert wurde.

## Revendications

1. Dispositif de commande du démarrage d'un moteur incluant un moyen pour arrêter un moteur en détectant qu'une soupape d'étranglement s'est fermée et pour démarrer le moteur en détectant que la soupape d'étranglement s'est ouverte, le dispositif de commande comprenant :
un moyen pour placer un vilebrequin à une position prédéterminée pour démarrer un moteur avant un démarrage du moteur ;
un moyen pour détecter la position d'un vilebrequin lorsqu'il est détecté que la soupape d'étranglement s'est ouverte ; et
un moyen pour décider dans quelles conditions redémarrer un moteur pendant que les révolutions du moteur sont maintenues sous l'effet d'une inertie, en faisant tourner normalement le moteur immédiatement lorsque la vitesse moteur est supérieure à une vitesse prioritaire à des révolutions normales et la soupape d'étranglement s'est ouverte, et en faisant tourner normalement le moteur après avoir arrêté le moteur et avoir mis la position du vilebrequin dans la position prédéterminée, lorsque la vitesse moteur est inférieure à la vitesse prioritaire à des révolutions normales ;
le dispositif de commande étant **caractérisé en ce qu'**il comprend en outre un moyen pour déterminer la vitesse prioritaire à des révolutions normales, la vitesse prioritaire à des révolutions normales étant fonction du stade de la soupape, qui est la position du vilebrequin sur le cycle de combustion complet du moteur.

2. Dispositif de commande du démarrage d'un moteur selon la revendication 1, lequel dispositif de commande est en outre **caractérisé en ce qu'**il comprend des moyens pour freiner le moteur dans le cas de la décision de démarrage d'un moteur en faisant tourner le moteur normalement après avoir mis la position du vilebrequin dans la position prédéterminée par le moyen décideur.
